# EUROPEAN PATENT SPECIFICATION

(11) **EP 4 595 416 B1**
(45) Date of publication and mention of the grant of the patent: **22.07.2026**
(21) Application number: 22789713.9
(22) Date of filing: 28.09.2022
(51) Int. Cl.: H04L 67/12, H04L 67/51, H04L 67/62

(54) **PROVIDING AND RECEIVING INFORMATION ABOUT A FIRST RESOURCE HOSTED AT A SERVER**
BEREITSTELLUNG UND EMPFANG VON INFORMATIONEN ÜBER EINE ERSTE AUF EINEM SERVER GEHOSTETE RESSOURCE
FOURNITURE ET RÉCEPTION D'INFORMATIONS CONCERNANT UNE PREMIÈRE RESSOURCE HÉBERGÉE SUR UN SERVEUR

(43) Date of publication of application: 06.08.2025
(73) Proprietor: Telefonaktiebolaget LM Ericsson (publ), 164 83 Stockholm (SE)
(72) Inventor: JIMÉNEZ, Jaime, 02420 Jorvas (FI)
(74) Representative: Ericsson
(86) International application number: PCT/SE2022/050861
(87) International publication number: WO 2024/072266

(56) References cited:
- US-A1- 2017 373 804
- US-B2- 11 290 519

## Description

### TECHNICAL FIELD

The invention relates to a network for providing and receiving information about a first resource hosted at a server, a server for providing information about a first resource hosted at the server, a client for receiving information about a first resource hosted at a server, a method performed by the server and the client, and a corresponding computer program.

### BACKGROUND

Constrained Application Protocol (CoAP) is a generic REpresentational State Transfer (REST) application protocol for constrained devices. Examples of constrained devices are micro controllers, smart devices, sensors and actuators, and computers with resource constraints. CoAP was originally intended for User Datagram Protocol (UDP) transmission, which is unreliable. Nowadays, CoAP uses Transmission Control Protocol (TCP) as well. This means that CoAP messages may arrive out of order, appear duplicated, or go missing without notice. A CoAP message may either comprise a request or a response. Furthermore, the request or the response may be either a confirmable or a non-confirmable request or response. For this reason, CoAP implements a lightweight reliability mechanism using four different message types, including confirmable and non-confirmable messages. If a request message or a response message is confirmable (CON), that means that the request message or the response message require an acknowledgement (ACK). In CoAP, a client is the originating endpoint of a request or the destination endpoint of a response whereas a server is the destination endpoint of a request and the originating endpoint of a response.

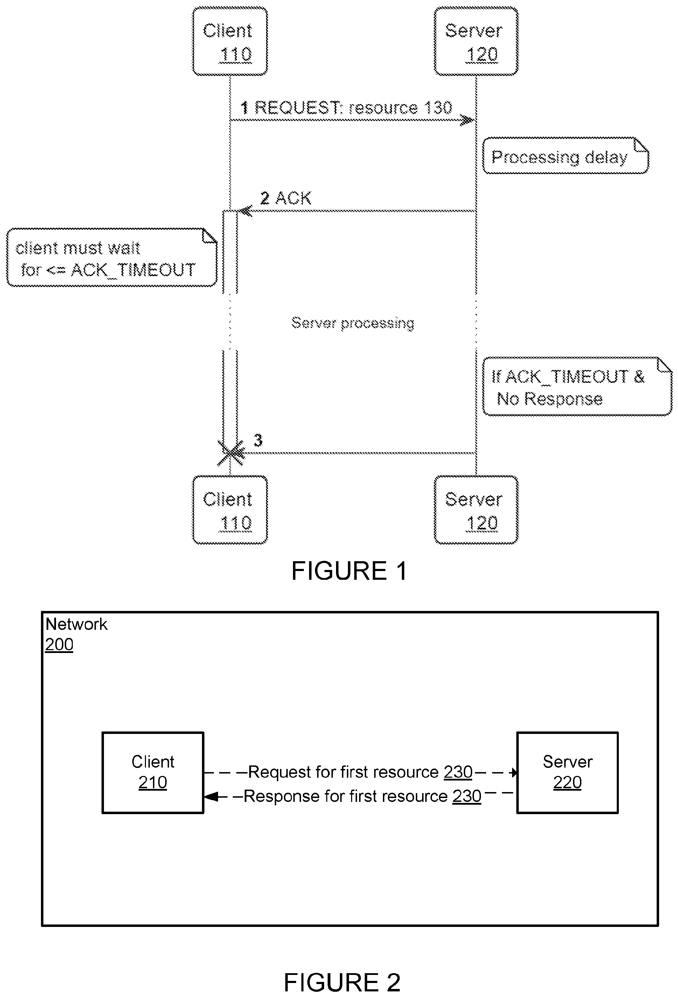

Figure 1 illustrates a prior art embodiment wherein a network 100 comprises a client 110 and a server 120. If the server 120 is not able to respond immediately to a request carried in a CON message by the client 110, it simply responds with an empty ACK message so that the client 110 can stop retransmitting the request. The ACK message is effectively a promise that the request will be acted upon later. The ACK message in this case is a CoAP separate response from the server to the client. When the response is ready, the server sends the response in a new CON message, which then in turn needs to be acknowledged by the client. The way the current setup is, the client may suffer by waiting for the response from the server or retransmitting the request to the server. The wait may, for example, lead to battery drain at the client.

Normally, time taken to process a response to the client from the server should be relatively small. CoAP defines PROCESSING_DELAY as the time a node takes to turn around (respond to) a CON message into an ACK message. The client assumes the server will send an ACK message before having the client time out. The time out for the client is equal to ACK_TIMEOUT and set to 2 seconds by default.

Hardware-wise, constrained nodes often have 8-bit microcontrollers with small amounts of Ready Only Memory (ROM) and Random Access Memory (RAM). CoAP clients are typically more constrained devices as compared to CoAP servers, as CoAP servers may be computers with plenty of RAM and ROM.

CoAP deployments may be done through a CoAP variant such as Lightweight Machine to Machine Protocol (LWM2M) from the Open Mobile Alliance (OMA), which is a device management and provisioning protocol for Internet of Things (IoT) devices.

Zach Shelby et al, The Constrained Application Protocol (CoAP) specifies the CoAP. IETF Datatracker [retrieved on 2022-09-26]. Retrieved from < https://datatracker.ietf.org/doc/rfc7252/ >.

US 2017/373804 A1 (HAN YANYAN [US] ET AL) 28 December 2017 relates to a delay-aware extension of CoAP.

### SUMMARY

An object of the invention is to improve management of a network using CoAP.

This and other objects are met by means of different aspects of the invention, as defined by the independent claims.

According to a first aspect, a server in a network for providing information about a first resource hosted at the server is provided. The server is configured to receive from a client, a first constrained application protocol, CoAP, message comprising a confirmable request relating to the first resource. The server is configured to create a second resource, wherein the second resource indicates a status of the confirmable request. The server is configured to send to the client, a second CoAP message comprising a response including a path of the second resource.

A possible advantage is that resource consumption in a network using CoAP is reduced. Another possible advantage may be that the invention provides an improved way to manage a network wherein CoAP is being used. Another possible advantage is that a client's battery drain may be reduced. Yet another possible advantage is that lesser messages and thus, lesser overhead is exchanged between the client and the server, making the network more performant. Another possible advantage is that by providing an asynchronous way to check the status of a confirmable request, the invention reduces frequency for the client to query the server in relation to the first resource.

According to an embodiment, the second CoAP message comprising the response comprises information about a time 't_{ind}' to ping the server for a query relating to information about the first resource. A possible advantage is that the client may reduce battery drain by pinging the server only after the time 't_{ind}'.

According to an embodiment, the time 't_{ind}' to ping the server is represented in UNIX time.

According to an embodiment, the server is configured to receive from the client, a third CoAP message comprising a second request requesting information about the second resource.

According to an embodiment, the server is configured to expose to the client, the second resource as an observable resource.

According to an embodiment, the server is configured to send to the client, a fourth CoAP message comprising an indication of a change in state of the first resource. A possible advantage is that the client may be able observe a change in state of the first resource.

According to an embodiment, the server is configured to send a fifth CoAP message comprising a second response to the first CoAP message comprising the confirmable request, wherein the second response comprises information about the first resource.

According to an embodiment, the server is configured to discard the second resource once the fifth CoAP message is sent. A possible advantage is that a number of resources in the network are reduced, thus making the network more performant.

According to an embodiment, the response is represented as a problem-detail structure.

According to an embodiment, the second CoAP message comprises a 2.00 success response code.

According to an embodiment, the path comprises a Uniform Resource Identifier, URI. According to an embodiment, the path is placed in a sub-directory of the path of the first resource.

According to a second aspect, a method performed by a server in a network for providing information about a first resource hosted at the server is provided. The method comprises receiving from a client, a first CoAP message comprising a confirmable request relating to the first resource. The method comprises creating a second resource, wherein the second resource indicates a status of the confirmable request. The method comprises sending to the client, a second CoAP message comprising a response including a path of the second resource.

According to an embodiment, the second CoAP message comprising the response comprises information about a time 't_{ind}' to ping the server for a query relating to information about the first resource. According to an embodiment, the time 't_{ind}' to ping the server is represented in UNIX time.

According to an embodiment, the method comprises receiving from the client, a third CoAP message comprising a second request requesting information about the second resource.

According to an embodiment, the method comprises exposing to the client, the second resource as an observable resource.

According to an embodiment, the method comprises sending to the client, a fourth CoAP message comprising an indication of a change in state at the first resource.

According to an embodiment, the method comprises sending a fifth CoAP message comprising a second response to the first CoAP message comprising the confirmable request, wherein the second response comprises information about the first resource.

According to an embodiment, the method comprises discarding the second resource once the fifth CoAP message is sent.

According to an embodiment, the response is represented as a problem-detail structure.

According to an embodiment, the second CoAP message comprises a 2.00 success response code.

According to an embodiment, the path comprises a Uniform Resource Identifier, URI**.** According to an embodiment, the path is placed in a sub-directory of the path of the first resource.

According to a third aspect, a client in a network for receiving information about a first resource hosted at a server is provided. The client is configured to send to the server, a first CoAP message comprising a confirmable request relating to the first resource. The client is configured to receive from the server, a second CoAP message comprising a response including a path of a second resource, wherein the second resource indicates a status of the confirmable request.

According to an embodiment, the second CoAP message comprising the response comprises information about a time 't_{ind}' to ping the server for a query relating to information about the first resource.

According to an embodiment, the client is configured to sleep for the time 't_{ind}' or shut down a connection with the server for the time 't_{ind}'.

According to an embodiment, the client is configured to send to the server, a third CoAP message comprising a second request requesting information about the second resource.

According to an embodiment, the client is configured to send to the server, a fourth CoAP message comprising information about a state of the first resource.

According to an embodiment, the client is configured to receive a fifth CoAP message comprising a second response to the first CoAP message comprising the confirmable request, relating to the first resource.

According to an embodiment, the client is configured to send to the server, a sixth CoAP message comprising a third request comprising an observe option for the first resource, if the first resource is listed as an observable resource.

According to an embodiment, the client is configured to receive from the server, an indication of a change in state of the first resource via the second resource.

According to an embodiment, the response is represented as a problem-detail structure. According to an embodiment, the second CoAP message comprises a 2.00 success response code.

According to an embodiment, the path comprises a Uniform Resource Identifier, URI**.**

According to an embodiment, the path is placed in a sub-directory of the path of the first resource.

According to a fourth aspect, a method performed by a client in a network for receiving information about a first resource hosted at a server is provided. The method comprises sending to the server, a first CoAP message comprising a confirmable request relating to the first resource. The method comprises receiving from the server, a second CoAP message comprising a response including a path of a second resource, wherein the second resource indicates a status of the confirmable request.

According to an embodiment, second CoAP message comprising the response comprises information about a time 't_{ind}' to ping the server for a query relating to information about the first resource.

According to an embodiment, the method comprises sleeping for the time 't_{ind}' or shut down a connection with the server for the time 't_{ind}'.

According to an embodiment, the method comprises sending to the server, a third CoAP message comprising a second request requesting information about the second resource.

According to an embodiment, the method comprises sending to the server, a fourth CoAP message comprising information about a state of the first resource.

According to an embodiment, the method comprises receiving a fifth CoAP message comprising a second response to the first CoAP message comprising the confirmable request, relating to the first resource.

According to an embodiment, the method comprises sending to the server, a sixth CoAP message comprising a third request comprising an observe option for the first resource, if the first resource is listed as an observable resource.

According to an embodiment, the method comprises receiving from the server, an indication of a change in state of the first resource via the second resource.

According to an embodiment, the response is represented as a problem-detail structure. According to an embodiment, the second CoAP message comprises a 2.00 success response code.

According to an embodiment, the path comprises a Uniform Resource Identifier, URI**.**

According to an embodiment, the path is placed in a sub-directory of the path of the first resource.

According to a fifth aspect, a server in a network for providing information about a first resource hosted at the server is provided. The server comprises at least one processor and memory comprising instructions executable by the at least one processor. The instructions when executed by the at least one processor causes the server to perform the method according to the second aspect.

According to a sixth aspect, a computer program comprises instructions which, when executed by at least one processor of a server, causes the server to carry out the method according to the second aspect.

According to a seventh aspect, a computer program product stored on a non-transitory computer readable (storage or recording) medium is provided. The computer program product comprises instructions that, when executed by a processor of a server, cause the server to perform the method according to the second aspect.

According to an eighth aspect, a client in a network for receiving information about a first resource hosted at a server is provided. The client comprises at least one processor and memory comprising instructions executable by the at least one processor. The instructions when executed by the at least one processor causes the client to perform the method according to the fourth aspect.

According to a ninth aspect, a computer program comprises instructions which, when executed by at least one processor of a client, causes the client to carry out the method according to the fourth aspect.

According to a tenth aspect, a computer program product stored on a non-transitory computer readable (storage or recording) medium is provided. The computer program product comprises instructions that, when executed by a processor of a client, cause the client to perform the method according to the fourth aspect.

According to an eleventh aspect, a network comprising a client and a server, for providing information about a first resource hosted at the server and receiving information about the first resource hosted at the server is provided. The network is configured to receive at the server from the client, a first CoAP message comprising a confirmable request relating to the first resource. The network is configured to create a second resource at the server, wherein the second resource indicates a status of the confirmable request. The network is configured to send to the client from the server, a second CoAP message comprising a response including a path of the second resource. The network is configured to send to the server from the client, the first CoAP message comprising the confirmable request relating to the first resource. The network is configured to receive from the server at the client, the second CoAP message comprising the response including the path of the second resource.

According to a twelfth aspect, a method performed by a network comprising a client and a server for providing information about a first resource hosted at the server and receiving information about the first resource hosted at the server is provided. The method comprises receiving at the server from the client, a first CoAP message comprising a confirmable request relating to the first resource. The method comprises creating a second resource at the server, wherein the second resource indicates a status of the confirmable request. The method comprises sending to the client from the server, a second CoAP message comprising a response including a path of the second resource. The method comprises sending to the server from the client, the first CoAP message comprising the confirmable request relating to the first resource. The method comprises receiving from the server at the client, the second CoAP message comprising the response including the path of the second resource.

According to a thirteenth aspect, a network, comprising a client and a server, for providing information about a first resource hosted at the server and receiving information about the first resource hosted at the server is provided. The network comprises at least one processor and memory comprising instructions executable by the at least one processor. The instructions when executed by the at least one processor causes the network to perform the method according to the twelfth aspect.

According to a fourteenth aspect, a computer program comprises instructions which, when executed by at least one processor of a network, causes the network to carry out the method according to the twelfth aspect.

According to a fifteenth aspect, a computer program product stored on a non-transitory computer readable (storage or recording) medium is provided. The computer program product comprises instructions that, when executed by a processor of a network, cause the network to perform the method according to the twelfth aspect.

### BRIEF DESCRIPTION OF THE DRAWINGS

The above, as well as additional objects, features and advantages of the invention, will be better understood through the following illustrative and non-limiting detailed description of embodiments of the invention, with reference to the appended drawings, in which:
Figure 1 illustrates a prior art embodiment wherein a network comprises a client and a server.
Figure 2 illustrates a network comprising a server and a client, in accordance with an embodiment of the invention.
Figure 3 illustrates a flowchart depicting an embodiment of a method in a server for providing information about a first resource hosted at the server.
Figure 4 illustrates a flowchart depicting an embodiment of a method in a client for receiving information about a first resource hosted at a server.
Figure 5 illustrates a flowchart of a method in the client according to an embodiment of the invention.
Figure 6A illustrates an example of a server and a client in a network in accordance with an embodiment of the invention.
Figure 6B illustrates an example of a server and a client in a network in accordance with an embodiment of the invention.
Figure 7 illustrates an example of an apparatus as implemented as implemented in accordance with an embodiment of the invention.
Figure 8 illustrates a computer program product, in accordance with an embodiment of the invention.

All the figures are schematic, not necessarily to scale, and generally only show parts which are necessary in order to elucidate the invention, wherein other parts may be omitted or merely suggested.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

This invention describes a server 220, a method performed by the server 220, a client 210 and a method performed by the client 210, a network 200 and a method performed by the network 200 for providing and/or receiving information about a first resource 230 hosted at the server 220 in the network 200. An object of the invention is to improve management in a network wherein Constrained Application Protocol (CoAP) is being used. Another object of the invention is to reduce resource consumption in a network using CoAP.

In the following, the network 200 may be a constrained network, a telecommunications network, a local area network, a wide area network, a vehicular communication network, a cloud-native network, an Internet of Things (IoT) network, a 3^{rd} Generation Partnership Project (3GPP) based network, a non-3GPP network, a network comprising both 3GPP and non-3GPP components, or a network comprising a combination of all the aforementioned network types. Preferably, the network 200 comprises a client 210. Preferably, the network 200 comprises a server 220. Examples of a server 220 and/or a client 210 in the network 200 are, but not limited to, a 3GPP network node, a non-3GPP network node, an IoT network node, a cloud-native network node, a constrained network node, a vehicular communication network node or any other node in any of the aforementioned network types. In an embodiment, the server 220 and the client 210 may comprise or be a server host and a client device, respectively. The server host and the client device host a server software and a client software, respectively. In an example, the server 220 and/or the client 210 specified herein may either be an IoT device, a constrained device, a cloud-native device, a telecommunications device, user device such as a User Equipment (UE) or a network device such as a radio access network node, a core network node and an external 3^{rd} party node. In an embodiment, the network 200 may comprise or be a CoAP network. In an embodiment, the server 220 and/or the client 210 may comprise or be a CoAP device. Also, the server 220, the client 210 or the network 200, or all of the server 220, the client 210 and the network 200, herein may be capable of running an application. The application may be a cloud-native application or any other application.

The invention disclosed herein may be used for providing and/or receiving information about a first resource 230 hosted at the server 220.

A resource is, as defined by Internet Engineering Task Force (IETF) Request for Comments (RFC) 2616, a network data object or service that can be identified by a URI. Resources may be available in multiple representations (e.g. multiple languages, data formats, size, and resolutions) or vary in other ways.

A method as described in prior art for providing information about a first resource hosted at a server or a method for receiving information about a first resource hosted at the server may provide a CoAP separate response message from the server to the client as a response to a request for information about the first resource. CoAP defines PROCESSING_DELAY as the time taken by a server to turn around or respond to a Confirmable (CON) message from a client into an acknowledgement (ACK) message. The client assumes that the server will send an ACK message before having the client timeout, so the timeout value is equal to ACK_TIMEOUT and set as 2 seconds by default. The assumption is that the server will attempt to send an ACK message before having the client time out, one or multiple times. The client after ACK_TIMEOUT retransmits the CON message as per IETF RFC 7252.

In practice, constrained devices such as Internet of Things (IoT) devices often take too long, for example, more than few seconds, to execute certain tasks. The constrained devices may be waiting on other processes or activities determined by their use (e.g., a robot arm that moves needs time to move) or processing for an extended amount of time (e.g., encryption, decryption, authorization) or waiting for another task (e.g., getting an authorization token from an authentication server).

While a network employing CoAP provides a concept of separate response, it is not flexible enough for client applications where there is the need to know about the current state of execution for a resource at the server. The separate response provided for in CoAP is not intended for application delays, but rather for retransmission timeouts (RTO) and network congestion delays. In managed IoT environments for example, as in Light Weight Machine-to-Machine (LwM2M), an LwM2M manager needs to know if an operation is still pending. The LwM2M may also need to know an expected processing time as other systems may depend on it. Implementations often try to solve the problem of finding out whether an operation is still pending and what a state of the operation is by constantly pinging IoT endpoints such as servers by the clients. This continuous pinging may be considered as a bad practice because it may have as a consequence the draining of the clients' battery. The continuous pinging may cause a situation which may be considered as an unintended Distributed Denial of Service (DDOS) attacks.

Moreover, CoAP separate responses require for the client to be ready for a response after an unknown period of time, which is not very suitable in a device-to-device scenario wherein both endpoints, the client and the server, are constrained and may not want to keep their radio connectivity open.

Figure 1 illustrates a prior art embodiment wherein a network 100 comprises a client 110 and a server 120. The prior art embodiment has been described to underline the differences between the present invention and the prior art. The network 100 uses CoAP for communication between the client 110 and the server 120. The client 110 sends a CoAP message comprising a request asking for information about a resource 130 to the server 120, while the server 120 is processing another request or processing a different operation. The server 130 sends a message to the client 110 comprising a response including an empty message, indicating the client 110 must wait before the request could be answered by the server 120. The client 110 maintains the connection open with the server 120, hoping to receive the response containing the requested information about the resource 130 and with a 2.04 success code for the request. The connection is maintained open for example for a maximum of 'ACK_TIMEOUT' seconds. If the client 110 does not receive the response within the ACK_TIMEOUT time, it closes the connection with the server 120 without receiving the information that the client 110 desired. In an embodiment, the client may then re-transmit the request upon re-establishing the connection with the server 120. The problem of such a way of dealing with requests at the server 120 is that it leads to drainage of battery and waste of resource at the client. This way of dealing may also lead to a waste of resources, such as signaling resources at the server. This solution in the prior art is not well-suited for scenarios in which processing time is longer than the ACK_TIMEOUT or when subsequent ACK messages are needed to keep the client 110 waiting.

Figure 2 illustrates a network 200, in accordance with an embodiment of the invention. The network 200 comprises a client 210 and a server 220 that are capable of communication via CoAP messaging. According to the invention, the client 210 and the server 220 exchange a CoAP message wherein information about a first resource 230 is included.

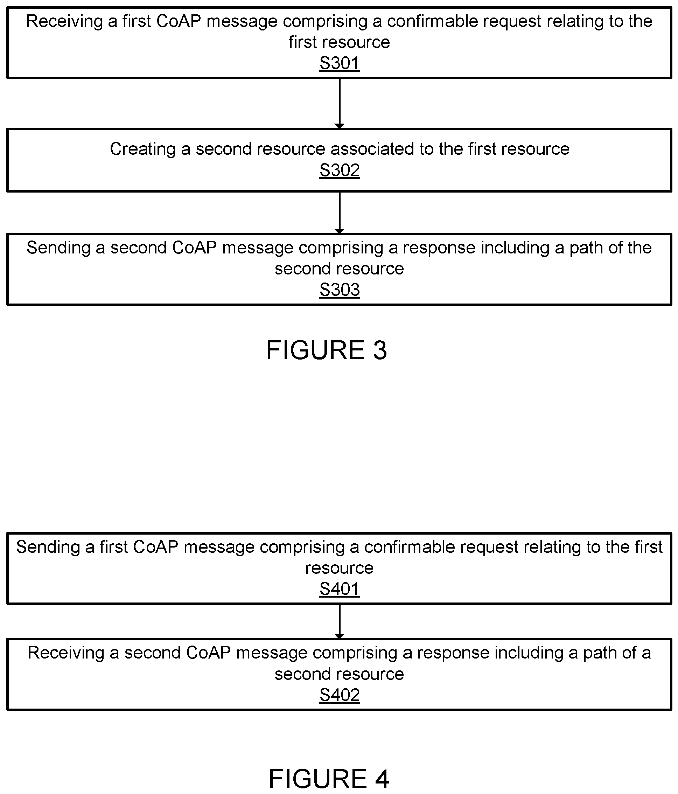

The server 220 provides information about the first resource 230, hosted at the server while the client 210 receives information about the first resource 230 from the server 220. The server 220 and the client 210 are configured to perform the method of figures 3 and 4, respectively. CoAP implements a lightweight reliability mechanism using four different message types, including confirmable and non-confirmable messages. A request message is a CoAP message comprising a request and a response message is a CoAP message comprising a response. Thus, if a request message or a response message is CON message, that means that the request message or the response message requires an ACK message.

Figure 3 illustrates a flowchart depicting embodiments of a method performed by a server 220 for providing information about a first resource 230 hosted at the server 220. In S301, the method comprises receiving from a client, a first CoAP message comprising a confirmable request relating to the first resource 230. In an embodiment, the server 220 is queried by the client 210 about the first resource 230. The server 220 however cannot provide a response "immediately" about the first resource 230, for example because there is another task in process at the server 220. In an embodiment, the server 220 cannot send a CoAP message comprising an acknowledgement and a response to the confirmable request. In S302, the method comprises creating a second resource 240, wherein the second resource 240 indicates a status of the confirmable request. In S303, the method comprises sending to the client, a second CoAP message comprising a response including a path of the second resource. The response comprises at least a newly created resource, the second resource 240. In an embodiment, the path may comprise a Uniform Resource Identifier (URI). In an embodiment, the second CoAP message comprises a new CoAP Code, for example, Success Code 2.00 (Accepted), which indicates that there is a task in process at the server 220 and that the earlier sent request is pending. A response code with success 2.XX, wherein XX is any integer from 1-99, indicates that the client's request was successfully received, understood and accepted. In an embodiment, the second resource 240 may have a URI. The second resource may have a path in a sub-directory of the path of first resource 230. In an embodiment, the second CoAP message comprises the path of the second resource. In an embodiment, the second resource indicates a state of the first request. For example, the state of the first request may be one of: pending, queued or completed. In an embodiment, the method may comprise sending an indication of a time 't_{ind}' when the first resource 230 at the server 220 can be pinged. In an embodiment, the second CoAP message comprising the response comprises information about the time 't_{ind}' to ping the server 220 for a query relating to information about the first resource 230. In an embodiment, the time 't_{ind}' is represented in UNIX time. In an embodiment, the method may comprise receiving from a client, a third CoAP message comprising a second request, requesting information about the status of the confirmable request. In another embodiment, the method may comprise receiving from the client 210, a third CoAP message comprising a second request, requesting information about the second resource. In an embodiment, the method comprises exposing to the client, the first resource 230 as an observable resource. In an embodiment, the method may comprise sending to the client 210, a fourth CoAP message comprising an indication of a change in state of the first resource 230. In an embodiment, the method may comprise sending the change in state of the first resource 230 at a pre-configured time. In an example, the pre-configured time may vary from a few seconds to a few minutes. In an embodiment, the method comprises sending to the client, a fifth CoAP message comprising a second response to the first CoAP message comprising the confirmable request, wherein the second response comprises information about the first resource 230. In an embodiment, the method comprises discarding the second resource once the fifth CoAP message is sent. In an example, the second resource may be discarded after a few seconds or discarded after a few minutes or after the fifth CoAP message is sent. In an embodiment, the second response is represented as a problem-detail structure. CoAP problem detail structure is a way to carry machine-readable details of errors in a REST response to avoid the need to define new error response formats for REST Application Program Interfaces (APIs) for constrained networks.

In case the server 220 does not have computational ability to process a confirmable request relating to the first resource 230, the method comprises the second resource indicating that the confirmable request cannot be processed at the server 220. In an embodiment, the second resource 240 may indicate the current status of the confirmable request relating to the first resource 230. The confirmable request may not be resolved yet because of which the client 210 may want to monitor the confirmable request. Thus, the second resource 240 may be a logical or virtual property. The first resource 230 and the second resource 240 are hosted on the server 220.

Figure 4 illustrates a flowchart depicting embodiments of a method performed by the client 210 for receiving information about the first resource 230 hosted at the server 220. In S401, the method comprises sending to the server, a first CoAP message comprising a confirmable request relating to the first resource 230. In S402, the method comprises receiving from the server 220, a second CoAP message comprising a response including a path of a second resource 240, wherein the second resource indicates a status of the confirmable request. In an embodiment, the path may comprise a Uniform Resource Identifier (URI). In an embodiment, the method may comprise sleeping for a time 't_{ind}' or waiting for a response for a time more than 't_{ind}'. In an embodiment, the method may comprise disconnecting a connection between the client 210 and the server 220 while being awake. In an embodiment, the method may comprise querying the second resource 240 after time 't_{ind}' wherein the second resource 240 indicates a state of the confirmable request which is an operation that is pending. The querying of the second resource 240 may be performed by sending a third CoAP message to the server 220, the third CoAP message comprising a second request requesting information about the status of the confirmable request. In another embodiment, the method may comprise sending, a third CoAP message comprising a second request to the server 220, requesting information about the second resource. In an embodiment, the method comprises sending to the server 220, a fourth CoAP message comprising information about a state of the first resource 230. In an embodiment, the method comprises receiving a fifth CoAP message from the server 220, the fifth CoAP message comprising a second response to the first CoAP message comprising the confirmable request relating to the first resource 230. In an embodiment, the method comprises sending to the server 220, a sixth CoAP message comprising a third request comprising an observe option for the first resource 230, if the first resource 230 is listed as an observable resource. In an embodiment, the client 210 is configured to receive from the server 220, an indication of a change in state of the first resource 230 via the second resource.

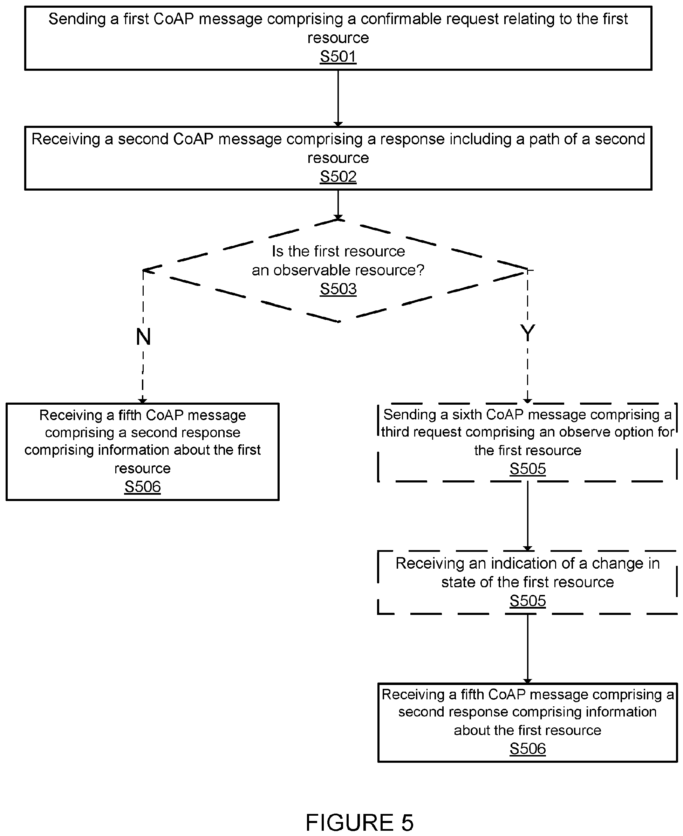

Figure 5 illustrates a flowchart of a method in the client 210 according to an embodiment of the invention. In S501 and S502, the client 210 performs the steps as given in S401 and S402, respectively. In S503, the method comprises checking whether the first resource 230 is an observable resource. This holds true if the server 220 indicates that the first resource 230 may be exposed as an observable resource. If the first resource 230 is an observable resource, then the client 210 performs the step S504, otherwise performs S506. The method further comprises registering at the server 220 with OBS=0, which is an observation or subscription pattern. The registering is performed by sending a sixth CoAP message comprising a third request comprising an observe option for the first resource 230. In S505, the method comprises receiving an indication of a change in state of the first resource 230 via the second resource 240. In S506, the method comprises receiving a fifth message comprising a second response to the first CoAP message comprising information about the first resource 230.

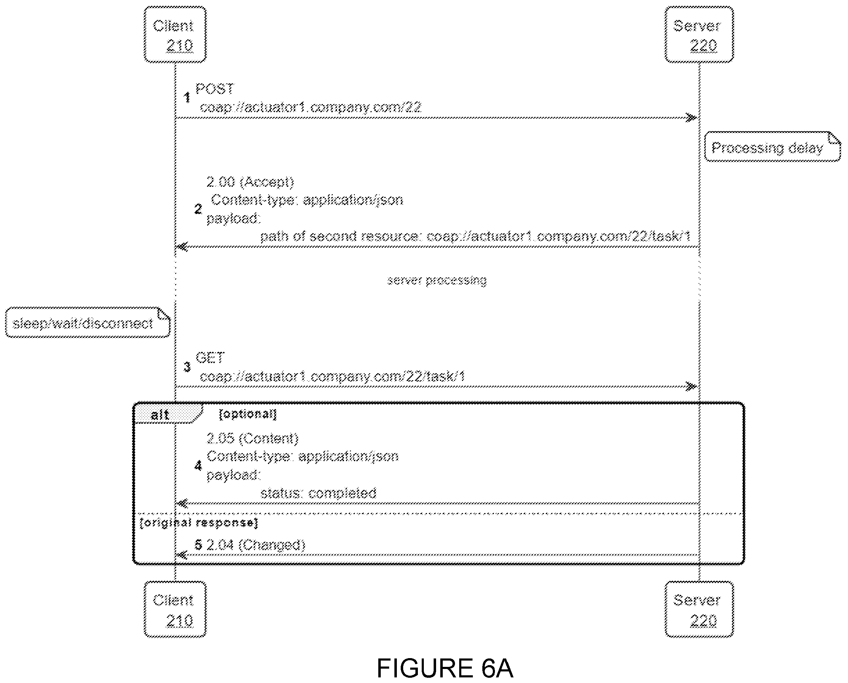

Figure 6A illustrates an example of a server 220 and a client 210 in a network 200 in accordance with an embodiment of the invention. In S601, the client 210 sends a first CoAP message comprising a confirmable request relating to a first resource 230. In an example, the first CoAP message comprises a CoAP POST message and the first resource 230 is an attribute of an actuator placed in a path that is, coap://actuator1.company.com/22. The attribute of an actuator may be, for example, a position of the actuator, a speed of the actuator or a measure of energization of the actuator. In S602, the server 220, after receiving the first message, cannot send a response back to the client 210 for the first message comprising the request and thus, the server 220 creates a second resource and sends a second CoAP message comprising a response including a path of the second resource. The second resource indicates a status of the confirmable request. In an embodiment, the status of the confirmable request may be idle, pending or finished. In an example, the second resource is created at a path in a sub-directory of the path of the first resource 230, for example the second resource is placed in coap://actuator1.company.com/22/task/1. In an embodiment, the second CoAP message comprises information about a time 't_{ind}' to ping the server 220 for a query relating to information about the first resource 230. Further, the client 210 receives the second message. In an embodiment, the client 210 may sleep for a time 't_{ind}' or shut down a connection with the server 220 for a time 't_{ind}'. In an embodiment, the client 210 may wait or sleep for a time 't_{ind}', which may indicate the time until an ACK message is received at the client 210 or until a timeout. In an embodiment, the client 210 may disconnect from the server 220 for a time 't_{ind}' before re-establishing a connection with the server 220. In an embodiment, the second CoAP message comprises a 2.00 success code, wherein the 2.00 success code signifies that a request has been received by the server 220 cannot be processed by the server 220 at that time. In S603, in an embodiment, the client 210 sends a third CoAP message comprising a second request that is requesting information about the status of the confirmable request. In another embodiment, the client 210 may sent a third CoAP message comprising a second request, requesting information about the second resource. In an example, the third CoAP message comprises a GET CoAP message to the second resource at the received path. In 604a, in an embodiment, the server 220 may receive a fifth CoAP message comprising information about a status of the confirmable request or information about a status of the first resource 230. In an example, the server 220 sends a 2.05 success code to the client 210 with an indication that the status of the confirmable request is finished or completed. In S605a, if the status of the confirmable request is finished or completed, the server 220 sends a message with a 2.04 success code to the client 210 with the response to the confirmable request.

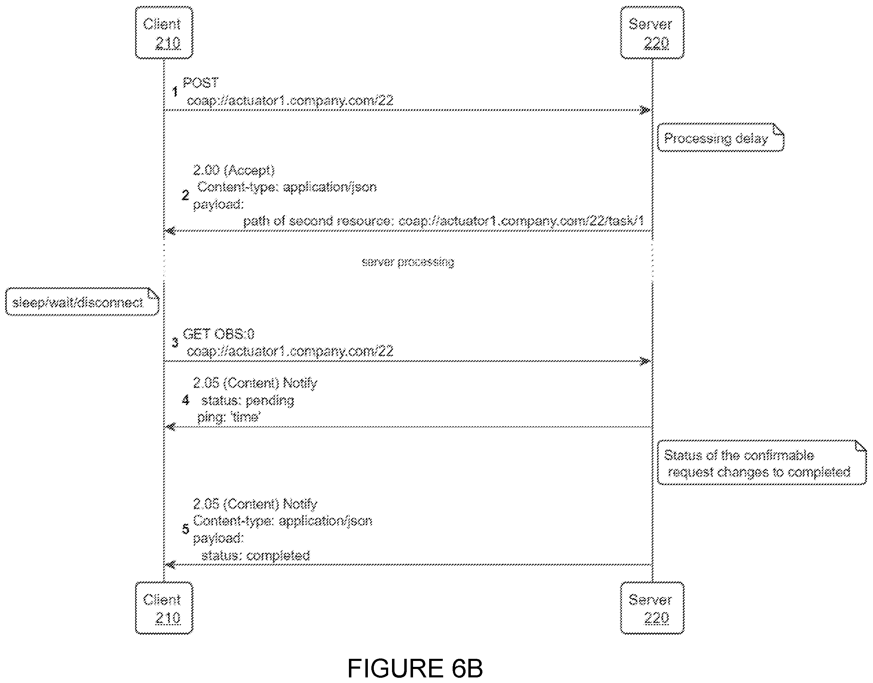

Figure 6B illustrates an example of a server 220 and a client 210 in a network 200 in accordance with an embodiment of the invention. Steps S601, S602 and S603 are the same as described for figure 6A. Further, the client 210 queries the first resource 230 and registers to a subscription or observation pattern for the first resource 230. In an example, the client 210 indicates an OBS=0 for the first resource 230 in the GET request that is sent to the server 220. In S604b, the server 220, upon receiving the OBS=0 indication and confirming that the first resource 230 can be exposed to the client 210, sends a 2.05 success code response to the client 210 and also sends a status of the confirmable request each time the status of the first resource 230 changes. The 2.05 success code notification response may be a notification for the OBS=0. In S605b, the server 220 sends a 2.05 success code with a status of 'completed' to the client 210 when the confirmable request is no longer processing or has been responded to.

According to an embodiment of the invention, a new response code may be used at the server 220. A response code with Success 2.XX indicates that a client's request was successfully received, understood and accepted. The new response code may be a 2.00 server response code as a 2.XX response code that a client's request was successfully received, understood and accepted. In an embodiment, the server 220 may represent a payload comprising the 2.00 response code as a problem-detail structure. Traditionally, problem-detail structure is used only for 4.XX and 5.XX response codes. The example below may illustrate contents of the payload comprising the 2.00 response code at the server 220 as per an embodiment of the invention with clarifications on what some of the rows of the problem-detail structure mean in square brackets.

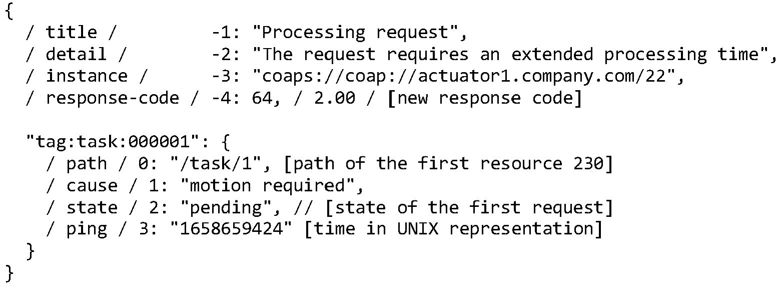

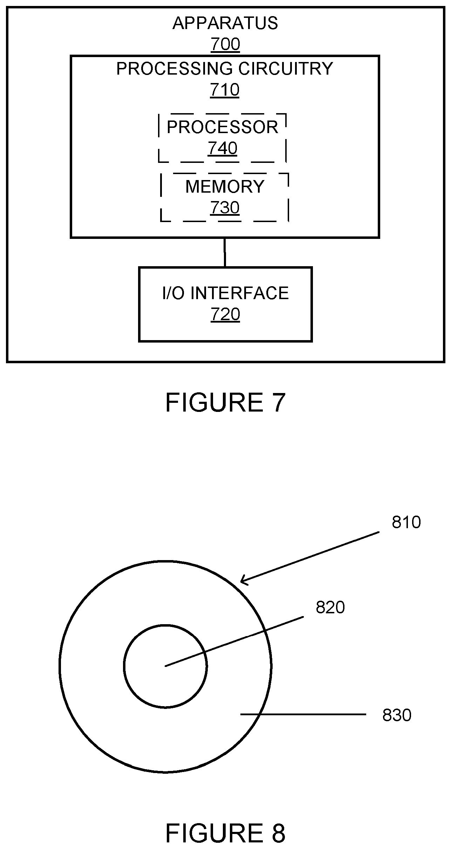

Figure 7 illustrates an example of an apparatus 700 as implemented in accordance with an embodiment of the invention. The apparatus 700 may be either a client 210 or a server 220 or a network 200. A processing circuitry 710 is adapted/configured/operable to cause the controller to perform a set of operations, or for example, steps, S301, S302, S303, S401, S402, S501, S502, S503, S504, S505, S506 as disclosed above, e.g., by executing instructions stored in memory 730. The processing circuitry 710 may comprise one or more of a microprocessor, a controller, a microcontroller, a central a processing unit, a digital signal processor, an application-specific integrated circuit, a field programmable gate array, or any other suitable computing device, resource, or combination of hardware, software and/or encoded logic operable to provide, either alone or in conjunction with other components of the apparatus 700, such as the memory 730, in order to provide relevant functionality. The processing circuitry 710 in this regard may implement certain functional means, units, or modules. Memory 730 may include one or more non-volatile storage medium and/or one or more volatile storage medium or a cloud-based storage medium. In embodiments where processing circuitry 710 includes a programmable processor 740, a computer program product 810 may be provided in the client 210 or the server 220 or the network 200. Such computer program product is described in relation to figure 8.

The memory 710 may store any suitable instructions, data, or information, including software, an application including one or more of logic, rules, code, tables, and/or other instructions/computer program code capable of being executed by the processing circuitry 710 and utilized by the apparatus 700. The memory 730 may further be used to store any calculations made by the processing circuitry 710 and/or any data received via the I/O interface circuitry 720, such as input from the apparatus 700. In some embodiments, the processing circuitry 710 and memory 730 are integrated.

Figure 8 illustrates one example of a computer program product in accordance with an embodiment of the invention. Computer program product 810 includes a computer readable storage medium 830 storing a computer program 820 comprising computer readable instructions. Computer readable medium 830 of the apparatus 700, may be a non-transitory computer readable medium, such as, magnetic media (e.g., a hard disk), optical media, memory devices (e.g., random access memory, flash memory), and the like. In some embodiments, the computer readable instructions of computer program 820 are configured such that when executed by processing circuitry 710, the computer readable instructions cause the apparatus 700 to perform steps described herein (e.g., S301, S302, S303, S401, S402, S501, S502, S503, S504, S505, S506). In other embodiments, the apparatus 700 may be configured/operable to perform steps described herein without the need for code. That is, for example, processing circuitry 710 may consist merely of one or more ASICs. Hence, the features of the embodiments described herein may be implemented in hardware and/or software.

The computer program code mentioned above may also be provided, for instance in the form of a data carrier carrying computer program code for performing the embodiments herein when being loaded into the hardware. One such carrier may be in the form of a CD ROM disc. It is however feasible with other data carriers such as a memory stick. The computer program code may furthermore be provided as pure program code on a server 220 or a client 210 or a network 200, and downloaded to the hardware at production, and/or during software updates.

The person skilled in the art realizes that the invention by no means is limited to the embodiments described above. On the contrary, many modifications and variations are possible within the scope of the appended claims. Examples of a client 210 include, but are not limited to, IoT devices, virtual network functions, cloud-native and non-cloud-native applications, Node Bs, evolved Node Bs (eNBs), NR nodeBs (gNBs), radio access points (APs), relay nodes, remote radio head (RRH), a node in a distributed antenna system (DAS), etc. Examples of a server 220 include, but are not limited to, IoT devices, virtual network functions, cloud-native and non-cloud-native applications, Node Bs, evolved Node Bs (eNBs), NR nodeBs (gNBs), radio access points (APs), relay nodes, remote radio head (RRH), a node in a distributed antenna system (DAS), etc. Additionally, the network 200 described herein could be a network for monitoring climate, of sensors and or actuators, autonomous vehicles, a telecommunication network, a fleet of vehicles embedded with communication modules, an industrial environment, a manufacturing plant, an appliance with multiple networking components or a combination of multiple environments.

In an embodiment, the network 200 may be an Open Radio Access Network (O-RAN) system for next generation radio access networks. In existing implementations of O-RAN, the network 200 herein could be implemented in an intelligent controller with nodes connected to the controller. An O-RAN system employing the method as described in the disclosure of this invention would realize the benefits of the invention. Therefore, reducing resource consumption and battery consumption for a client 210 receiving information about a resource hosted at a server 220, while the server 220 is processing another task or incapable of providing the information about the resource at that point. The client 210 as per this invention may lead to a reduced carbon footprint as compared to a client in a traditional network. A possible advantage presented by the disclosure of this invention may be scheduling pending task times by management applications. For example, scheduling pending task times may be performed by sending a notification from the server 220 to an application at the client 210 that a task is pending and potentially estimating at the server 220 about how long the task would take so that the client 210 knows when to ping the server 220 again. Another possible advantage of the invention may be to provide a richer mechanism than the current 'separate responses' feature of CoAP. Another possible advantage of the invention may be that the client 210 may not need to keep radio channel open while waiting for pending operations at the server 220, thus making the invention more lightweight. A notable advantage of the invention may be that by providing an asynchronous way to see the state of a processed request or the confirmable request, this solution eliminates the need, in some scenarios, for the client 210 to constantly query the server 220. Another advantage of the invention is that frequency for the client 210 to query the server 220 in relation to the first resource is reduced. Thus, a possible advantage of the invention is that communication or exchange of messages (along with overhead) between the client 210 and the server 220 is reduced.

Although an apparatus has been used in the above embodiments, a person skilled in the art understands that the apparatus may also be a UE, an Internet of Things (IoT) device, a virtual machine, a cloud-computing node, an edge node, any electronic device with a network interface chip, a network management node, Operations Sub-System (OSS), Network Management System (NMS) and a 2G/3G/4G/5G/6G network node.

The client 210 or the server 220 in the form of an IoT device may be a device for use in one or more application domains, these domains comprising, but not limited to, home, city, wearable technology, extended reality, industrial application, and healthcare.

By way of example, the IoT device for a home, an office, a building or an infrastructure may be a baking scale, a coffee machine, a grill, a fridge, a refrigerator, a freezer, a microwave oven, an oven, a toaster, a water tap, a water heater, a water geyser, a sauna, a vacuum cleaner, a washer, a dryer, a dishwasher, a door, a window, a curtain, a blind, a furniture, a light bulb, a fan, an air-conditioner, a cooler, an air purifier, a humidifier, a speaker, a television, a laptop, a personal computer, a gaming console, a remote control, a vent, an iron, a steamer, a pressure cooker, a stove, an electric stove, a hair dryer, a hair styler, a mirror, a printer, a scanner, a photocopier, a projector, a hologram projector, a 3D printer, a drill, a hand-dryer, an alarm clock, a clock, a security camera, a smoke alarm, a fire alarm, a connected doorbell, an electronic door lock, a lawnmower, a thermostat, a plug, an irrigation control device, a flood sensor, a moisture sensor, a motion detector, a weather station, an electricity meter, a water meter, and a gas meter.

By further ways of example, the IoT device for use in a city, urban, or rural areas may be connected street lighting, a connected traffic light, a traffic camera, a connected road sign, an air control/monitor, a noise level detector, a transport congestion monitoring device, a transport controlling device, an automated toll payment device, a parking payment device, a sensor for monitoring parking usage, a traffic management device, a digital kiosk, a bin, an air quality monitoring sensor, a bridge condition monitoring sensor, a fire hydrant, a manhole sensor, a tarmac sensor, a water fountain sensor, a connected closed circuit television, a scooter, a hoverboard, a ticketing machine, a ticket barrier, a metro rail, a metro station device, a passenger information panel, an onboard camera, and other connected device on a public transport vehicle.

As further way of example, the communication IoT device may be a wearable device, or a device related to extended reality, wherein the device related to extended reality may be a device related to augmented reality, virtual reality, merged reality, or mixed reality. Examples of such IoT devices may be a smart-band, a tracker, a haptic glove, a haptic suit, a smartwatch, clothes, eyeglasses, a head mounted display, an ear pod, an activity monitor, a fitness monitor, a heart rate monitor, a ring, a key tracker, a blood glucose meter, and a pressure meter.

As further ways of example, the IoT device may be an industrial application device wherein an industrial application device may be an industrial unmanned aerial vehicle, an intelligent industrial robot, a vehicle assembly robot, and an automated guided vehicle.

As further ways of example, the IoT device may be a transportation vehicle, wherein a transportation vehicle may be a bicycle, a motor bike, a scooter, a moped, an auto rickshaw, a rail transport, a train, a tram, a bus, a car, a truck, an airplane, a boat, a ship, a ski board, a snowboard, a snow mobile, a hoverboard, a skateboard, roller-skates, a vehicle for freight transportation, a drone, a robot, a stratospheric aircraft, an aircraft, a helicopter and a hovercraft.

As further ways of example, the IoT device may be a health or fitness device, wherein a health or fitness device may be a surgical robot, an implantable medical device, a non-invasive medical device, and a stationary medical device which may be: an in-vitro diagnostic device, a radiology device, a diagnostic imaging device, and an x-ray device.

The person skilled in the art will also appreciate that the blocks in the circuit diagram of the client 210 and the server 220 may refer to a combination of analog and digital circuits, and/or one or more controllers, configured with software and/or firmware, e.g. stored in one or more local storage units, that when executed by the client 210 or the server 220 or the network 200 perform the steps as described above. One or more of the client 210, the server 220 or the network 200, as well as any other combination of analog and digital circuits, may be included in a single application-specific integrated circuitry (ASIC), or several controllers and various digital hardware may be distributed among several separate components, whether individually packaged or assembled into a system-on-a-chip (SoC). The one or more client 210, the server 220 or the network 200 may be any one of, or a combination of a central processing unit (CPU), graphical processing unit (GPU), programmable logic array (PAL) or any other similar type of circuit or logical arrangement.

## Claims

1. A server (220) of a network (200) for providing information about a first resource (230) hosted at the server (220), the server (220) configured to:
receive from a client (210), a first constrained application protocol, CoAP, message comprising a confirmable request relating to the first resource (230);
create a second resource (240), wherein the second resource (240) indicates a status of the confirmable request; and
send to the client (210), a second CoAP message comprising a response including a path of the second resource (240).

2. The server (220) of claim 1, wherein the second CoAP message comprising the response comprises information about a time 't_{ind}' to ping the server (220) for a query relating to information about the first resource (230).

3. The server (220) of claims 1 or 2, configured to receive from the client (210), a third CoAP message comprising a second request requesting information about the second resource (240).

4. The server (220) of any one of claims 1-3, configured to expose to the client (210), the second resource (240) as an observable resource.

5. The server (220) of claim 4, configured to send to the client (210), a fourth CoAP message comprising an indication of a change in state of the first resource (230).

6. The server (220) of any one of claims 1-5, configured to send a fifth CoAP message comprising a second response to the first CoAP message comprising the confirmable request, wherein the second response comprises information about the first resource (230).

7. The server (220) of claim 6, configured to discard the second resource (240) once the fifth CoAP message is sent.

8. The server (220) of any one of claims 1-7, wherein the response is represented as a problem-detail structure and/or wherein the second CoAP message comprises a 2.00 success response code, and/or wherein the path comprises a Uniform Resource Identifier, URI.

9. The server (220) of any one of claims 1-8, wherein the path is placed in a sub-directory of the path of the first resource (230).

10. A method performed by a server (220) of a network (200) for providing information about a first resource (230) hosted at the server (220), the method comprising:
receiving from a client (210), a first constrained application protocol, CoAP, message comprising a confirmable request relating to the first resource (230);
creating a second resource (240), wherein the second resource (240) indicates a status of the confirmable request; and
sending to the client (210), a second CoAP message comprising a response including a path of the second resource (240).

11. A client (210) of a network (200) for receiving information about a first resource (230) hosted at a server (220), the client (210) configured to:
send to the server (220), a first constrained application protocol, CoAP, message comprising a confirmable request relating to the first resource (230); and
receive from the server (220), a second CoAP message comprising a response including a path of a second resource (240), wherein the second resource (240) indicates a status of the confirmable request.

12. The client (210) of claim 11, wherein the second CoAP message comprising the response comprises information about a time 't_{ind}' to ping the server (220) for a query relating to information about the first resource (230), and, the client configured to: sleep for the time 't_{ind}' or shut down a connection with the server (220) for the time 't_{ind}'.

13. A method performed by a client (210) of a network (200) for receiving information about a first resource (230) hosted at a server (220), the method comprising:
sending to the server (220), a first constrained application protocol, CoAP, message comprising a confirmable request relating to the first resource (230); and
receiving from the server (220), a second CoAP message comprising a response including a path of a second resource (240), wherein the second resource (240) indicates a status of the confirmable request.

14. A computer program comprising instructions which, when executed by: at least one processor (740) of a server (220), causes the server to carry out the method according to claim 10; and/or when executed by at least one processor (740) of a client (210), causes the client to carry out the method according to claim 13.

15. A network (200), comprising the client (210) according to claim 11 and the server (220) according to claim 1, for providing information about a first resource (230) hosted at the server (220) and receiving information about the first resource (230) hosted at the server (220).

## Patentansprüche

1. Server (220) eines Netzwerks (200) zum Bereitstellen von Informationen über eine erste Ressource (230), die auf dem Server (220) gehostet wird, wobei der Server (220) konfiguriert ist zum:
Empfangen, von einem Client (210), einer ersten eingeschränkten Anwendungsprotokoll-, CoAP-, Nachricht, die eine bestätigungsfähige Anforderung bezüglich der ersten Ressource (230) umfasst;
Erzeugen einer zweiten Ressource (240), wobei die zweite Ressource (240) einen Status der bestätigungsfähigen Anforderung angibt; und
Senden, an den Client (210), einer zweiten CoAP-Nachricht, die eine Antwort einschließlich eines Pfades der zweiten Ressource (240) umfasst.

2. Server (220) nach Anspruch 1, wobei die zweite CoAP-Nachricht, die die Antwort umfasst, Informationen über einen Zeitpunkt 't_{ind}' umfasst, um den Server (220) für eine Anfrage bezüglich Informationen über die erste Ressource (230) anzupingen.

3. Server (220) nach Anspruch 1 oder 2, der dafür konfiguriert ist, vom Client (210) eine dritte CoAP-Nachricht zu empfangen, die eine zweite Anforderung umfasst, die Informationen über die zweite Ressource (240) anfordert.

4. Server (220) nach einem der Ansprüche 1-3, der dafür konfiguriert ist, dem Client (210) die zweite Ressource (240) als beobachtbare Ressource zu enthüllen.

5. Server (220) nach Anspruch 4, der dafür konfiguriert ist, an den Client (210) eine vierte CoAP-Nachricht zu senden, die eine Angabe einer Änderung beim Zustand der ersten Ressource (230) umfasst.

6. Server (220) nach einem der Ansprüche 1-5, der dafür konfiguriert ist, eine fünfte CoAP-Nachricht zu senden, umfassend eine zweite Antwort auf die erste CoAP-Nachricht, die die bestätigungsfähige Anforderung umfasst, wobei die zweite Antwort Informationen über die erste Ressource (230) umfasst.

7. Server (220) nach Anspruch 6, der dafür konfiguriert ist, die zweite Ressource (240) zu verwerfen, sobald die fünfte CoAP-Nachricht gesendet ist.

8. Server (220) nach einem der Ansprüche 1-7, wobei die Antwort als eine Problem-Detail-Struktur dargestellt wird und/oder wobei die zweite CoAP-Nachricht einen Erfolgsantwortcode 2.00 umfasst und/oder wobei der Pfad einen Uniform-Resource-Identifikator, URI, umfasst.

9. Server (220) nach einem der Ansprüche 1-8, wobei der Pfad in einem Unterverzeichnis des Pfades der ersten Ressource (230) platziert ist.

10. Verfahren, das von einem Server (220) eines Netzwerks (200) zum Bereitstellen von Informationen über eine erste Ressource (230), die auf dem Server (220) gehostet wird, durchgeführt wird, wobei das Verfahren umfasst:
Empfangen, von einem Client (210), einer ersten eingeschränkten Anwendungsprotokoll-, CoAP-, Nachricht, die eine bestätigungsfähige Anforderung bezüglich der ersten Ressource (230) umfasst;
Erzeugen einer zweiten Ressource (240), wobei die zweite Ressource (240) einen Status der bestätigungsfähigen Anforderung angibt; und
Senden, an den Client (210), einer zweiten CoAP-Nachricht, die eine Antwort einschließlich eines Pfades der zweiten Ressource (240) umfasst.

11. Client (210) eines Netzwerks (200) zum Empfangen von Informationen über eine erste Ressource (230), die auf einem Server (220) gehostet wird, wobei der Client (210) konfiguriert ist zum:
Senden an den Server (220) einer ersten eingeschränkten Anwendungsprotokoll-, CoAP-, Nachricht, die eine bestätigungsfähige Anforderung bezüglich der ersten Ressource (230) umfasst; und
Empfangen vom Server (220) einer zweiten CoAP-Nachricht, die eine Antwort umfasst, die einen Pfad zu einer zweiten Ressource (240) einschließt, wobei die zweite Ressource (240) einen Status der bestätigungsfähigen Anforderung angibt.

12. Client (210) nach Anspruch 11, wobei die zweite CoAP-Nachricht, die die Antwort umfasst, Informationen über einen Zeitpunkt 't_{ind}' umfasst, um den Server (220) für eine Anfrage bezüglich Informationen über die erste Ressource (230) anzupingen, und der Client konfiguriert ist: für die Zeit 't_{ind}' zu schlafen oder eine Verbindung mit dem Server (220) für die Zeit 't_{ind}' abzuschalten.

13. Verfahren, das von einem Client (210) eines Netzwerks (200) zum Empfangen von Informationen über eine erste Ressource (230), die auf einem Server (220) gehostet wird, durchgeführt wird, wobei das Verfahren umfasst:
Senden an den Server (220) einer ersten eingeschränkten Anwendungsprotokoll-, CoAP-, Nachricht, die eine bestätigungsfähige Anforderung bezüglich der ersten Ressource (230) umfasst; und
Empfangen vom Server (220) einer zweiten CoAP-Nachricht, die eine Antwort umfasst, die einen Pfad zu einer zweiten Ressource (240) einschließt, wobei die zweite Ressource (240) einen Status der bestätigungsfähigen Anforderung angibt.

14. Computerprogramm, das Anweisungen umfasst, die, wenn sie von mindestens einem Prozessor (740) eines Servers (220) ausgeführt werden, bewirken, dass der Server das Verfahren nach Anspruch 10 ausführt; und/oder wenn sie von mindestens einem Prozessor (740) eines Clients (210) ausgeführt werden, bewirken, dass der Client das Verfahren nach Anspruch 13 ausführt.

15. Netzwerk (200), umfassend den Client (210) nach Anspruch 11 und den Server (220) nach Anspruch 1, zum Bereitstellen von Informationen über eine erste Ressource (230), die auf dem Server (220) gehostet wird, und Empfangen von Informationen über die erste Ressource (230), die auf dem Server (220) gehostet wird.

## Revendications

1. Serveur (220) d'un réseau (200) destiné à fournir des informations sur une première ressource (230) hébergée sur le serveur (220), le serveur (220) étant configuré pour :
recevoir d'un client (210), un premier message de protocole d'application contraint, CoAP, comprenant une requête confirmable relative à la première ressource (230) ;
créer une deuxième ressource (240), dans laquelle la deuxième ressource (240) indique un statut de la requête confirmable ; et
envoyer au client (210), un deuxième message CoAP comprenant une réponse incluant un chemin vers la deuxième ressource (240).

2. Serveur (220) selon la revendication 1, dans lequel le deuxième message CoAP comprenant la réponse comprend des informations sur un temps 't_{ind}', pour envoyer une requête ping au serveur (220) pour une demande relative à des informations sur la première ressource (230).

3. Serveur (220) selon la revendication 1 ou 2, configuré pour recevoir du client (210), un troisième message CoAP comprenant une deuxième requête demandant des informations sur la deuxième ressource (240).

4. Serveur (220) selon l'une quelconque des revendications 1-3, configuré pour exposer au client (210), la deuxième ressource (240) comme une ressource observable.

5. Serveur (220) selon la revendication 4, configuré pour envoyer au client (210), un quatrième message CoAP comprenant une indication d'un changement d'état de la première ressource (230).

6. Serveur (220) selon l'une quelconque des revendications 1-5, configuré pour envoyer un cinquième message CoAP comprenant une deuxième réponse au premier message CoAP comprenant la requête confirmable, dans lequel la deuxième réponse comprend des informations sur la première ressource (230).

7. Serveur (220) selon la revendication 6, configuré pour supprimer la deuxième ressource (240) une fois que le cinquième message CoAP est envoyé.

8. Serveur (220) selon l'une quelconque des revendications 1-7, dans lequel la réponse est représentée sous la forme d'une structure problème-détail et/ou dans lequel le deuxième message CoAP comprend un code de réponse de réussite 2.00, et/ou dans lequel le chemin comprend un identifiant uniforme de ressource, URI.

9. Serveur (220) selon l'une quelconque des revendications 1-8, dans lequel le chemin est placé dans un sous-répertoire du chemin vers la première ressource (230).

10. Procédé réalisé par un serveur (220) d'un réseau (200) pour fournir des informations sur une première ressource (230) hébergée sur le serveur (220), le procédé comprenant :
la réception d'un client (210), d'un premier message de protocole d'application contraint, CoAP, comprenant une requête confirmable relative à la première ressource (230) ;
la création d'une deuxième ressource (240), dans laquelle la deuxième ressource (240) indique un statut de la requête confirmable ; et
l'envoi au client (210), d'un deuxième message CoAP comprenant une réponse incluant un chemin vers la deuxième ressource (240).

11. Client (210) d'un réseau (200) destiné à recevoir des informations sur une première ressource (230) hébergée sur un serveur (220), le client (210) étant configuré pour :
envoyer au serveur (220), un premier message de protocole d'application contraint, CoAP, comprenant une requête confirmable relative à la première ressource (230) ; et
recevoir du serveur (220), un deuxième message CoAP comprenant une réponse incluant un chemin vers une deuxième ressource (240), dans laquelle la deuxième ressource (240) indique un statut de la requête confirmable.

12. Client (210) selon la revendication 11, dans lequel le deuxième message CoAP comprenant la réponse comprend des informations sur un temps 't_{ind}', pour envoyer une requête ping au serveur (220) pour une demande relative à des informations sur la première ressource (230), et, le client étant configuré pour : dormir pendant le temps 't_{ind}' ou fermer une connexion avec le serveur (220) pendant le temps 't_{ind}'.

13. Procédé réalisé par un client (210) d'un réseau (200) pour recevoir des informations sur une première ressource (230) hébergée sur un serveur (220), le procédé comprenant :
l'envoi au serveur (220) d'un premier message de protocole d'application contraint, CoAP, comprenant une requête confirmable relative à la première ressource (230) ; et
la réception du serveur (220), d'un deuxième message CoAP comprenant une réponse incluant un chemin vers une deuxième ressource (240), dans laquelle la deuxième ressource (240) indique un statut de la requête confirmable.

14. Programme informatique comprenant des instructions qui, lorsqu'elles sont exécutées par : au moins un processeur (740) d'un serveur (220), amènent le serveur à mettre en œuvre le procédé selon la revendication 10 ; et/ou lorsqu'elles sont exécutées par au moins un processeur (740) d'un client (210), amènent le client à mettre en œuvre le procédé selon la revendication 13.

15. Réseau (200), comprenant le client (210) selon la revendication 11 et le serveur (220) selon la revendication 1, pour fournir des informations sur une première ressource (230) hébergée sur le serveur (220) et recevoir des informations sur la première ressource (230) hébergée sur le serveur (220).
